# EUROPEAN PATENT APPLICATION

(11) **EP 3 520 626 A1**
(43) Date of publication of application: **07.08.2019**
(21) Application number: 18155375.1
(22) Date of filing: 06.02.2018
(51) Int. Cl.: A23K 50/80

(54) **COMPOSITIONS FOR AQUACULTURE FEED**

(71) Applicant: Tereos Starch & Sweeteners Europe, 67390 Marckolsheim (FR)
(72) Inventor: APPER, Emmanuelle, 88520 Bertrimoutier (FR); VOLLER, Samuel, Plymouth, Devon PL4 8AA (GB); MERRIFIELD, Daniel, Plymouth, Devon PL4 8AA (GB)
(74) Representative: Icosa

(57) **Abstract**

The present invention relates to a feed composition for aquaculture, especially for fish aquaculture that comprise a wheat protein blend consisting of wheat gluten and a wheat protein hydrolysate; and at least one oligosaccharide in an amount ranging from about 0.2% to about 10 % w/w; said oligosaccharides having a polymerization degree ranging from 2 to 6. The feed compositions may be used as a feed supplement. Both feed compositions and supplements can be further formulated in the form of feed pellets. Furthermore, the advantageous profile of the inventions feed compositions, supplements or pellets may be used in a method for inducing the yield of an aquaculture.

Taking into consideration, the unexpected immune-system stimulating effect induced by the feeding of an aquaculture with the feed compositions, supplement and pellets, the invention relates to their use in the prevention of a infectious diseases in an aquaculture population.

## Description

### FIELD OF INVENTION

The present invention relates to the field of aquaculture, and especially to the feeding of cultivated organisms, such as for example fish. Especially, this invention proposes feeds for aquaculture, comprising a mixture of plant derived proteins in association with oligosaccharides. The plant derived proteins may be wheat proteins in association with fructooligosaccharides, preferably short chain fructooligosaccharides. This association shows a beneficial effect to promote the growth and health of cultivated organisms, improve their immune systems, and induce physiological benefits beyond traditional feeds such as, for example, plant protein-based diets.

### BACKGROUND OF INVENTION

With the increased demand for the production of more sustainably sourced fish, the ever-expanding aquaculture industry is now fully aware of the combined importance of animal nutrition and health. The drive for increased sustainability and intensification having evolved in the aquaculture industry and many plant proteins have undergone intensive investigation as potential alternatives or additives to fish-derived base nutrition.

The aim of achieving fish-derived contents below 10% of the fish feeds, without impairing growth performance or organism health received much interest. Legumes, oilseeds and cereal grains are among some of the most investigated and commercially utilized protein sources in fish feeds. Candidate proteins must not only provide acceptable growth and health performance, but they must be economically viable, readily available and practical to process, store and transport. Further beneficial characteristics sought after include low levels of antinutritional factors, for example non-soluble carbohydrates and fiber. High protein content is crucial, as well as favorable amino acid profile, palatability and nutrient digestibility (Gatlin et al., 2007). The replacement of fish-derived contents with plant proteins has improved greatly from the 1990's until now, with reliance resting on certain plant protein sources, namely soy. However, soy proteins may end up with showing detrimental effects if they are used at very high inclusion levels, and they may also show high ecological/carbon footprint due to the growing locations and reliance on genetically modified crops in the USA. This analysis led not only to a drive for fishmeal alternatives but also for plant proteins that can be utilized in a blend of plant proteins, thereby reducing the inclusion levels and reliance on single sources.

The annual production of plant derived proteins is vast. Approximatively 230 million tons of plant based proteins are produced annually, and are competitively priced, generally between USD500-1800 per ton (NOAA, 2011). Although not always having protein concentrations as high as fish-derived base nutrition, developments in ingredient processing has enabled the enhancement of concentration of protein in refined products, making their inclusion in aquafeeds more viable. With their wide availability and lower price point, plant proteins are an obvious source of proteins to be utilized in aquafeeds.

However, the inclusion of plant proteins in fish food is not devoid of disadvantages. The palatability of plant proteins may be of concern when utilized in extremely low fish-derived base nutrition and fish oil formulations; digestibility and low levels of certain essential amino acids, namely lysine and methionine may also be an issue. The low levels of these amino acids often require supplementation with free amino acids to meet the nutritional requirements of aquaculture species when plant proteins are incorporated at high inclusion levels (Davies et al., 1997; Nunes et al., 2014).

As the aquaculture industry grows annually, the use of alternative protein sources should be concomitant to further technical effects. Producing feeds that grow fish rapidly with low feed conversion ratios is no longer sufficient.

The Applicant surprisingly found out that using wheat gluten in association with the oligosaccharides showed synergistic effects, especially with comparison to situations where fish were fed with soy protein-based feeds. Indeed, replacing soy proteins by wheat gluten and short chain fructooligosaccharides yielded unexpected effects in the fish health while maintaining or even improving their growth.

Advantageously, the invention shows that replacing part or all of soy protein by wheat gluten in the present invention's compositions not only maintains but even enhances the fish growth-factor. In particular, the addition of wheat gluten combined with short chain fructooligosaccharides supplementation shows a beneficial synergistic effect in both gut microbiota modulation and gene expression of immune-relevant and stress related genes, with promising applications in aquafeeds.

The present invention satisfies the current aquaculture unmet needs. In fact, the sufficient nutritional support inducing (1) the modulation of the innate immune response and intestinal microbiota and morphology, (2) an antioxidant state and (3) a lower amount of inclusion levels of other detrimental plant proteins are strong opportunities offered by the present invention's feed compositions.

### SUMMARY

The Applicant, responding to the needs of the aquaculture market, found that the feed compositions of the invention satisfy the feed growth requirements by replacing entirely or partially ubiquitous feed bases by a blend of a vegetable protein blend is association with at least one oligosaccharide.

In a first aspect, the present invention relates to a feed composition for aquaculture, especially for fish aquaculture, comprising a vegetable protein blend, preferably a wheat protein blend and at least one oligosaccharide.

The feed composition for aquaculture, especially fish aquaculture, of the invention comprise a wheat protein blend consisting of wheat gluten and a wheat protein hydrolysate; and at least one oligosaccharide in an amount ranging from about 0.2% to about 10 % w/w; said oligosaccharides having a polymerization degree ranging from 2 to 6; w/w meaning in weight relative to the total weight of the composition.

In one embodiment, the wheat protein blend is in an amount ranging from about 5% to about 25 % w/w, and the at least one oligosaccharide is in an amount ranging from about 0.2% to about 5 % w/w.

In another embodiment of the invention, the ratio between the wheat protein blend and the at least one oligosaccharide ranges from about 40:1 to about 70:1.

The at least one oligosaccharide may be selected from fructooligosaccharides, galactooligosacharides, arabinoxylooligosaccharides, mannanoligosaccharides and combinations thereof. Preferably the at least one oligosaccharide is selected from fructooligosaccharides. In one embodiment, the fructooligosaccharides are selected from a group consisting of kestose, nystose, fructosylnystose and mixtures thereof.

The feed composition for aquaculture of the invention may further comprise inclusion ingredients generally known in the art such as fish-based meal, soybean meal and proteins, starches, fish oil, amino acid supplements, mineral elements, vitamins and antioxidants.

In one embodiment, the feed composition according to the invention, further comprise soy protein in an amount ranging from about 20% to about 30 % w/w, in weight relative to the total weight of the composition.

In one embodiment, the feed composition according to the invention, further comprises at least one ingredient selected from: soybean based meal in an amount not exceeding 15% w/w; starch, preferably corn starch, in an amount not exceeding 15% w/w; fish oil in an amount not exceeding 20% w/w; at least one amino acid, preferably selected from a group consisting of lysine and arginine, said at least one amino acid being in an amount not exceeding 2% w/w; mineral elements selected from Ca, Mg, P and Cu, in an amount not exceeding 2% w/w; vitamins selected from vitamin A, vitamin E and vitamin D3, in an amount not exceeding 1% w/w; and/or antioxidant agents selected from butylated hydroxytoluene, ethoxyquin, tocopherols, ascorbic acid and carotenoids, in an amount not exceeding 0.05% w/w; in weight relative to the total weight of the composition.

As previously discussed, the feed composition may be supplemented with fish-derived meal base which is preferably in an amount ranging from about 1% to about 10% w/w in weight relative to the total weight of the composition. Even more preferably the fish-derived meal base is a herring derived base meal.

In a particular embodiment, the feed composition according to the invention comprises: wheat protein blend in about 20% w/w; at least one oligosaccharide selected from fructooligosaccharides having a polymerization degree ranging from 3 to 5, in an amount ranging from about 0.2 % to about 0.5 % w/w; soy protein in an amount ranging from about 25% to about 55% w/w; fish derived base meal in about 10 % w/w; and lysine in an amount ranging from about 1% to about 2% w/w, in weight relative to the total weight of the composition.

According to another embodiment, the feed composition of the invention comprises: wheat protein blend in about 20% w/w; at least three oligosaccharides selected from: kestose in an amount ranging from about 0.09% to about 0.15% w/w; nystose in an amount ranging from about 0.17 % to about 0.2%; and fructosylnystose in an amount ranging from about 0.02% to about 0.05%. According to the same embodiment, the feed composition further comprises soy protein in an amount ranging from about 25% to about 55% w/w; fish derived base meal in about 10 % w/w; and lysine in an amount ranging from about 1% to about 2% w/w in weight relative to the total weight of the composition.

The feed compositions of the invention can be fed to shrimp or fish aquacultures. In particular, the feed composition according to the invention, is a fish feed composition, wherein the fish is selected from the Salmonidae family. The Salmonidae family comprises fish of the taxa *Salmo, Oncorynchus, Salvelinus* or crossbreeds thereof; preferably the fish belongs to the *Oncorhynchus mykiss* taxon.

The feed compositions of the invention can be used as such for the aquaculture feeding needs. However, the feed compositions can be used as aquaculture feed supplements. A skilled artisan can calculate the proportions of the inventions compositions and a commercialized fish feed and admixing them accordingly. Thus, in a second aspect, the invention relates to an aquaculture feed supplement composition comprising the feed composition of the invention as previously described.

In a third aspect, the invention relates to feed pellets comprising the aquaculture feed composition or feed supplement composition according to the invention.

In a fourth aspect, the invention relates to a method for inducing the yield of an aquaculture. This method comprises the feeding of the aquaculture with the feed composition according, the feed supplement composition, or the pellets according to the invention.

Feeding an aquaculture with the feed compositions of the invention presents advantageous effects on the immune system of the aquaculture species. Therefore, in a fifth aspect, the invention relates to the feed composition, the feed supplement composition or the pellets for use in the prevention of a bacterial, fungal, parasitic or viral disease in an aquaculture fish population.

### DEFINITIONS

In the present invention, the following terms have the following meanings:
- **"About"** preceding a figure means plus or less 10% of the value of said figure.
- **"Aquaculture"** is understood to mean the farming of aquatic organisms including fish, and crustaceans. Farming implies some form of intervention in the rearing process to enhance production, such as regular stocking, feeding, protection from predators. In one embodiment, the aquaculture refers to shrimp or fish aquaculture. In another embodiment, the aquaculture refers to fish aquaculture, preferably a carnivore or optionally-camivore fish aquaculture. In a particular embodiment of the invention, the aquaculture refers to a salmonid fish aquaculture.
- **"Condition factor"** Refers to a qualitative measure of the fish aquaculture, namely salmonid fish aquaculture. Condition factor is also known as Coefficient of condition K-factor and is calculated by the following formula: K=10^{N}W/L³; wherein W is the weight of the fish in grams (g), L is the length of the fish in millimetres (mm). In the case of salmonids, length is measured from the tip of the snout to the rear edge of the fork at the centre of the tail fin; known as length to caudal fork (LCF). The cube of the length is used because growth in weight of salmonids is proportional to growth in volume. N = 5; For salmonid fish, K values usually fall in the range 0.8 to 2.0. The value of K is influenced by age of fish, sex, season, stage of maturation, fullness of gut, type of food consumed, amount of fat reserve and degree of muscular development. For the salmonids a K value of about 1.2 indicates a fair fish condition, a K value of about 1.4 indicates a good fish condition and a K value of about 1.6 indicates an excellent fish condition.
- **"Feed conversion ratio"** (FCR) or feed conversion rate is a ratio or rate-measuring of the efficiency with which the bodies of an aquaculture species converts animal feed into the desired output. According to the present invention, the outpout for the measurement of the FCR consists in the aquaculture mass yield.
- **"Feed pellet"** refers to a composition of fish feed that has been subjected to a heat treatment, such as a steam treatment, and extruded through a machine. Fish feed pellet is commonly made by extruding the protein raw materials, the binder and optionally the minerals and/or the vitamins to which water is added. Lipids can be added before extrusion but are commonly added into the porous pellets formed by extrusion (for example by coating). According to the invention, the lipid fraction may be vegetable or animal oil or fat such as soy oil, corn oil, palm oil, castor bean oil, maize germ oil or fish oil.
- **"Fish-derived meal base",** fish meal, or fishmeal, is a commercial product mostly made from fish. Fishmeal can be made from almost any type of seafood; a small portion is made from the bones and offal left over from processing fish used for human consumption, while the larger percentage is manufactured from wild-caught, small marine fish that contain a high percentage of bones and oil, and are usually deemed not suitable for direct human consumption; either unmanaged by-catch or sometimes sustainable fish stocks. The fish-derived meal base is often in the form of a powder or a cake obtained by drying the fish or fish trimmings, often after cooking, and then grinding it. Other sources of fishmeal are from by catch and byproducts of trimmings made during processing (fish waste or offal) of various seafood products destined for direct human consumption such as anchovies, horse mackerel, pout, sand-eel, sprat, capelin, mackerel, herring, blue whiting, sardine, pilchard, sauries, mackerels, pilchard, menhaden or pollock.
- **"Fructoligosaccharide"** refers to an oligosaccharide of D-fructose residues linked by β(2→1) bonds with a terminal α(1→2) linked D-glucose. Fructoligosaccharides can be obtained from the enzymatic or chemical hydrolysis of sucrose or inulin. Inulin-derived fructooligosaccharides are also referred to as **"Oligofructoses".** Fructooligosaccharides are obtained as a mixture of oligosaccharides with the general structure Glu-Fruₙ (GFₙ) and Fruₘ (Fₘ), with n and m ranging from 1 to 7. The main components of commercial products are kestose (GF₂), nystose (GF₃), fructosylnystose (GF₄), bifurcose (GF₃), inulobiose (F₂), inulotriose (F₃), and inulotetraose (F₄).
- **"Fructosylnystose"** refers to the short chain fructooligosaccharide beta-D-fructofuranosyl(2→1)-beta-D-fructofuranosyl(2→1)-beta-D-fructofuranosyl (2→1)-beta-D-fructofuranosyl(2→1)-alpha-D-glucopyranoside, having the CAS number 59432-60-9.
- **"Kestose"** refers to the short chain fructooligosaccharide beta-D-fructofuranosyl-(2→1)-beta-D-fructofuranosyl alpha-D-glucopyranoside, having the CAS number 12505-31-6.
- **"Nystose"** refers to the short chain fructooligosaccharide beta-D-fructofuranosyl(2→1)-beta-D-fructofuranosyl (2→1)-beta-D-fructofuranosyl(2→1)-alpha-D-glucopyranoside, having the CAS number 13133-07-8.
- **"Oligosaccharide"** refers to refers to a compound containing two or more monosaccharide units linked by glycosidic bonds.
- **"Microbiota"** refers to the ecological community of commensal, symbiotic and pathogenic microorganisms found in and on aquaculture species. Particularly, the invention's description refers to the intestinal microbiota whose collective genome is herein referred as enterobiome.
- **"Prebiotic"** refers to a food ingredient that induces the growth or activity of beneficial microorganisms, preferably microorganisms of the intestinal microbiota.
- **"Probiotics"** refers to microorganisms that provide health benefits when consumed by enriching the intestinal microbiota.
- **"Protein efficiency ratio"** or PER Protein efficiency ratio (PER) is based on the weight gain of a test species divided by its intake of a particular food protein during the test period. PER = [gain in body mass (g)]/ [Protein intake (g)].
- **"Salmonid"** refer to fish of the taxon Salmonidae, comprising fish of the taxa *Salmo, Oncorynchus, Salvelinus* or crossbreeds thereof. The fish aquaculture feed compositions of the present invention refer preferably to the fish belonging to the *Oncorhynchus mykiss* taxon.
- **"Short chain oligosaccharide"** refer to an oligosaccharide having from 2 to 6 monosaccharide units linked by glycosidic bonds. Thus, short chain oligosaccharides are characterized by a polymerization degree ranging from 2 to 6. In embodiments of the present invention, short chain oligosaccharides are short chain fructooligosaccharides having a polymerization degree ranging from 2 to 6, from 3 to 5.
- **"Specific Growth Rate"** (SGR) "SGR expresses the mean growth rate of an aquaculture tank population. SGR = (lnWf - InWi x100)/t, wherein
   lnWf = the natural logarithm of the final weight
   InWi = the natural logarithm of the initial weight
   t = time (days) between InWf and InWi. the SGR can also be calculated by dividing the Percentage body weight fed per day by the food conversion rate (FCR).
- **"Vital Wheat Gluten"** or **"Wheat gluten"** refer to the rubbery mass that remains when wheat dough is washed to remove starch granules and water-soluble constituents", containing 75-85% protein and 5-10% lipid (depending of the extensiveness of the washing process). Gluten is comprised of hundreds of polypeptides, half being monomeric gliadins, containing intrachain di-sulfide bonds, and polymeric glutenin, di-sulfide-cross linked polypeptides. Gliadins and glutenins give gluten its distinctive properties. In one embodiment, the wheat gluten used in the inventions compositions is untreated wheat gluten. In one embodiment, the wheat gluten has been previously hydrolyzed. In a particular embodiment, the inventions compositions comprise a blend of wheat gluten and hydrolyzed gluten.

### DETAILED DESCRIPTION

Intensive production of farmed fish fed with compound feeds increased lately, due to the growth of aquaculture production but also because this way of feeding fish was recognized as the most efficient way of fish production. In such feeds, fish meal used to be the major source of proteins, especially for salmonids. Nevertheless, because of the limited amount of available fish meal in the market, its lack of sustainability and its increasing price, its inclusion in diets is progressively reduced. In order to achieve a low fish meal incorporation without impairing growth performance, plant proteins are considered as a viable substitute of fish meal. As the aquaculture industry grows annually, research continues towards protein alternatives enabling the volume of aquafeed produced to increase, with the finite fishmeal available and without any dependence on a sole alternative protein source.

### Compositions

In a first aspect, the present invention relates to a feed composition for aquaculture, especially for fish aquaculture, comprising a vegetable protein blend, preferably a wheat protein blend and at least one oligosaccharide.

The Applicant found that the aquaculture feed compositions of the invention showed an advantageous profile. On the one hand, the invention's feed compositions surprisingly enhance the immune system of the fed aquatic organisms. On the other hand, the invention's aquaculture feed compositions advantageously maintain or even enhance the aquaculture growth despite the partial or complete substitution of ubiquitous ingredients such as fishmeal or soy protein-based ingredients.

In fact, the Applicant shows that the association of a wheat protein blend with short chain oligosaccharides modulates the pro-inflammatory cytokine expression in the anterior intestine of the aquaculture organisms. The down-regulation of the pro-inflammatory cytokines is significantly superior to the effect observed past the feeding with other vegetable protein-based aquaculture feeds.

Tumor necrosis factor alpha (TNF-α), which plays an important role in cell proliferation, migration, differentiation, apoptosis, necrosis, and the induction of other cytokines was significantly down-regulated past the diet with the invention's compositions.

Down-regulation of the pro-inflammatory cytokine Interleukin-1β was observed with the invention's experimental diet compared to diets supplemented solely by oligosaccharides.

Interleukin-1β is a key mediator in response to microbial tissue injury and invasion, activating lymphocytes or causing a cascade resulting in the release of other cytokines activating lymphocytes, macrophages and NK cells.

Caspase-3, a cell death effector caspase, is the most important terminal caspase, without which apoptosis cannot occur (Rojas et al., 2012) and is often activated after failed DNA damage responses (Krumschnabel et al., 2010). Surprisingly, the aquaculture diet based on the invention's feeding compositions leads to the down-regulation of Caspase-3 as well.

Heat-Shock Protein 70 that is used as an indicator or cellular stress in numerous studies, was also significantly down-regulated past the diet with the invention's feed compositions. Heat-Shock Protein 70 is known to mediate the degradation and repair of denatured or altered proteins and is highly conserved at amino acid level (Basu et al., 2002; Kiang and Tsokos, 1998). Levels of expression have been shown to be affected by many factors such as pathogen invasion and detrimental stocking densities (Sanden and Olsvik, 2009; Zhang et al., 2014; Gornati et al., 2004). Significant up-regulation of Heat-Shock Protein 70 has been observed in the posterior intestine of Atlantic salmon fed with soybean meal-based diets compared to fishmeal controls, attributed to increased cellular repair and apoptosis (Bakke-McKellep et al., 2007b). Up-regulation was also observed in response to model toxicants (Sanden and Olsvik, 2009), genetically modified maize (Sagstad et al., 2007) and unfavorable diet compositions (Martin et al., 2003; Hemre et al., 2004). Reduced Heat-Shock Protein 70 is generally associated with reduced stress, indicating less detrimental effects occurring in the posterior intestine as Heat-Shock Protein 70 codes for proteins in stressful conditions (Iwama et al., 2004).

Furthermore, the diet with the invention's feed compositions leads to the down-regulation of Glutathione S transferase. Glutathione S transferase detoxifies both reactive oxygen species as well as toxic xenobiotics (Wu et al., 2004; Li, 2009). Detoxification is achieved through glutathione S transferase catalysing glutathione dependent conjugation and redox reactions (Li, 2009). Aquaculture feed supplementation effect on oxidative stress parameters is a poorly studied field, making it difficult to correlate each ingredient with a particular effect. However, reduced glutathione S transferase combined with reduced apoptosis (caspase-3 expression) and intestinal stress (Heat-Shock Protein 70 expression) can be considered as a beneficial effect.

Therefore, the invention's aquaculture feed compositions contribute to the stress reduction of the aquatic organism population, improving its health status and concomitantly contributing to the enhancement of the aquaculture quantitative and qualitative yield.

The Applicant, without willing to be bound to a theory, considers that the invention's feed compositions have a positive effect on the aquaculture species' intestinal microbiota. This prebiotic effect reduces the energy requirements of the intestine and concomitantly its inflammatory status. It is to be noted that the diet with the feed compositions of the invention did not alter the short chain fatty acid composition of the posterior intestine allochthonous bacterial community, observed species and microbiota species richness. Interestingly, the Applicant found that vegetable proteins in association with oligosaccharides demonstrate a synergistic effect inducing beneficial strains proportion within the intestinal microbiota. The diet with the feed compositions of the invention increased the *Lactobacillus* spp. and *Kocuria* genus populations compared to the ones observed past a standard vegetable protein-based aquaculture diet. *Lactobacillus Macrococcus and Weissella* spp, as generally admitted, are considered as an efficient probiotic strains in a broad range of species.

Consequently, the present inventions compositions may prevent infectious diseases not only by supporting the immune system of the aquatic species but also by acting as a prebiotic agent, increasing the ratio of beneficial bacterial strains in the aquatic organism intestinal microbiota.

Lastly, the invention's aquaculture feed compositions have a beneficial effect in the aquaculture growth. The Applicant was surprised to observe that despite the partial or complete substitution of ubiquitous ingredients such as fishmeal or soy protein-based ingredients, the present feed compositions advantageously maintain or even enhance the aquaculture yield.

### Wheat Protein Blend

The use of wheat derived proteins could be considered more sustainable than many other alternative plant protein sources.

In one embodiment, the vegetable protein blend according to the invention is a wheat protein blend.

Wheat is the third most produced cereal worldwide, only surpassed by rice and maize. Global production of wheat reached in excess of million tons in 2014, produced predominantly in Asia, Europe and the Americas (FAO, 2015a). Europe is the second largest producer of wheat, producing over 237.5 million tons in 2014, 33% of the global production, with only Asia producing more. The ecological footprint of wheat derived proteins used in European feed formulations is consequently much lower than other plant protein sources, such as soy, which is inevitably shipped from the Americas who produce 87.7% of the global volumes.

Gluten meals, high-protein co-products from the removal of starch from certain cereal grains, are highly digestible proteins, rich in glutamine which are considered to be potentially beneficial plant protein sources. Wieser (2007) simply defined gluten as "the rubbery mass that remains when wheat dough is washed to remove starch granules and water-soluble constituents", containing 75-85% protein and 5-10% lipid (depending of the extensiveness of the washing process). The remainder essentially consists of starch and non-starch carbohydrates. Gluten is comprised of hundreds of polypeptides, half being monomeric gliadins, containing intrachain di-sulfide bonds, and polymeric glutenin, di-sulfide-cross linked polypeptides (Day et al., 2006). Gliadins and glutenins give gluten its distinctive properties. Gliadins (30-100 kDa) provide viscosity and extensibility, whilst glutenin (100-10,000 kDa) provides gluten's elasticity and tenacity (Apper-Bossard et al., 2013). Through the increased industrial removal of wheat starch from gluten and the associated drying technologies to retain functional properties, wheat gluten has become increasingly more economically viable as a feed ingredient. Transported around the world in its dry state (vital wheat gluten), rehydration regenerates the gliadin and glutenin functional properties.

A major concern in the replacement of fishmeal by vegetable based ingredients in aquafeeds is the dietary fibre content, which must remain low, especially in carnivorous species which have a limited ability to digest fibre. Hilton et al. (1983) demonstrated reduced growth rates and dry matter digestibility coefficients in juvenile rainbow trout fed diets of 10% fibre. Due to these effects, dietary fibre is often considered to be an antinutritional factor. Advantageously, vital wheat gluten is very low in fibre, typically <1%, much lower than many other plant protein sources.

As well as being low in fibre, wheat gluten is also extremely low in other antinutritional factors, which plague other plant protein sources and restrict levels of inclusion. Wheat gluten contains little or is devoid of anti-nutritional factors such as protease inhibitors, lectins, phytic acid, saponins, phytoestrogens, antivitamins, phytic acid, tannins, allergens, glucosinolates, alkaloids and cyanogens. Furthermore, vital wheat gluten has had no association with intestinal enteritis, which is often a detrimental consequence of high plant protein inclusion, especially soybean meal, in salmonids (Bakke-McKellep et al., 2007c; Refstie et al., 2000; UrAN et al., 2008b).

These functional properties of wheat gluten, combined with its high digestibility and low levels of anti-nutritional factors render wheat gluten as a promising ingredient in aquaculture feed compositions. However, reduced weight gain and final fish weight were observed with 41% wheat gluten inclusion by Tibaldi et al. (2003). Contrary to the latter observation, the present invention's wheat protein blend in association with oligosaccharides had a positive effect on the final fish weight.

The health benefits to fish, especially salmonids, of wheat gluten inclusion have not been extensively studied and the available information is often contradictory. Wheat gluten's functional properties in the invention's compositions may help to promote the immune system and not cause the effects seen with large inclusions of vegetable, namely soy derived proteins.

Vital Wheat Gluten is a vegetable protein source that has been given very promising results. Furthermore, it is a high-quality protein source, highly digestible, with an interesting profile of amino-acids, especially a high level of glutamine. Vital wheat gluten as a protein source is -80% crude protein, higher than many other protein sources used in aquafeeds, including fishmeal (70-75% crude protein) and other plant proteins, soy protein concentrate (-75% crude protein), soy bean meal (48% crude protein), pea protein concentrate (-50% crude protein), distillers dried grains (28-32% crude protein) and corn gluten meal (-62% crude protein) (Hardy, 2010; Tibbetts et al., 2006).

In one embodiment of the invention, the wheat protein blend comprises or consists of wheat gluten and a wheat protein hydrolysate.

In one embodiment, the wheat protein blend is in an amount ranging from about 10 to about 90% w/w. In one embodiment, the wheat protein blend is in an amount ranging from about 10 to about 80% w/w. In one embodiment, the wheat protein blend is in an amount ranging from about 10 to about 70% w/w. In one embodiment, the wheat protein blend is in an amount ranging from about 10 to about 60% w/w. In one embodiment, the wheat protein blend is in an amount ranging from about 10 to about 50% w/w. In one embodiment, the wheat protein blend is in an amount ranging from about 10 to about 40% w/w. In one embodiment, the wheat protein blend is in an amount ranging from about 15 to about 35% w/w. In one embodiment, the wheat protein blend is in an amount ranging from about 15 to about 30% w/w. In one embodiment, the wheat protein blend is in an amount ranging from about 15 to about 25% w/w. In one embodiment, the wheat protein blend is in an amount ranging from about 16 to about 22% w/w. In one embodiment, the wheat protein blend is in an amount ranging from about 16 to about 21% w/w. In one embodiment, the wheat protein blend is in an amount of about 16%, about 17%, about 18 %, about 19 % or about 20 % w/w. In one embodiment, the wheat protein blend is in an amount of about 20 % w/w. The w/w expressing the in weight percentage relative to the total weight of the composition.

According to one embodiment, the ratio of wheat gluten mass to the wheat protein hydrolysate mass in the aquaculture feed compositions of the present invention ranges from about 5 to about 20. In one embodiment, the ratio of wheat gluten mass to the wheat protein hydrolysate mass ranges from about 6 to about 18. In one embodiment, the ratio of wheat gluten mass to the wheat protein hydrolysate mass ranges from about 7 to about 17. In one embodiment, the ratio of wheat gluten mass to the wheat protein hydrolysate mass ranges from about 8 to about 16. In one embodiment, the ratio of wheat gluten mass to the wheat protein hydrolysate mass ranges from about 8 to about 15. In one embodiment, the ratio of wheat gluten mass to the wheat protein hydrolysate mass ranges from about 8 to about 14. In one embodiment, the ratio of wheat gluten mass to the wheat protein hydrolysate mass ranges from about 8 to about 13. In one embodiment, the ratio of wheat gluten mass to the wheat protein hydrolysate mass ranges from about 8 to about 12. In one embodiment, the ratio of wheat gluten mass to the wheat protein hydrolysate mass ranges from about 8 to about 11. In one embodiment, the ratio of wheat gluten mass to the wheat protein hydrolysate mass ranges from about 8 to about 10. In one embodiment, the ratio of wheat gluten mass to the wheat protein hydrolysate mass is about 8, about 9, about 10 or about 11. In one embodiment, the ratio of wheat gluten mass to the wheat protein hydrolysate mass is about 9.

According to such embodiments, the wheat gluten in the composition is in an amount ranging from about 5 to about 95 % w/w. In one embodiment, the wheat gluten is in an amount ranging from about 10 to about 90% w/w. In one embodiment, the wheat gluten is in an amount ranging from about 10 to about 80% w/w. In one embodiment, the wheat gluten is in an amount ranging from about 10 to about 70% w/w. In one embodiment, the wheat gluten is in an amount ranging from about 10 to about 60% w/w. In one embodiment, the wheat gluten is in an amount ranging from about 10 to about 50% w/w. In one embodiment, the wheat gluten is in an amount ranging from about 10 to about 40% w/w. In one embodiment, the wheat gluten is in an amount ranging from about 15 to about 40% w/w. In one embodiment, the wheat gluten is in an amount ranging from about 15 to about 30% w/w. In one embodiment, the wheat gluten is in an amount ranging from about 16 to about 30% w/w. In one embodiment, the wheat gluten is in an amount ranging from about 16 to about 25% w/w. In one embodiment, the wheat gluten is in an amount ranging from about 16 to about 20% w/w. In one embodiment, the wheat gluten is in an amount ranging from about 16 to about 18% w/w. In one embodiment, the wheat gluten is in an amount of about 16%, about 17%, or about 18 % w/w. The w/w expressing the in weight percentage relative to the total weight of the composition.

According to such embodiments, the wheat protein hydrolysate content in the composition ranges from about 0.1 to about 30 % w/w. In one embodiment, the wheat protein hydrolysate is in an amount ranging from about 0.1 to about 20% w/w. In one embodiment, the wheat protein hydrolysate is in an amount ranging from about 0.5 to about 20% w/w. In one embodiment, the wheat protein hydrolysate is in an amount ranging from about 1 to about 20% w/w. In one embodiment, the wheat protein hydrolysate is in an amount ranging from about 1 to about 10% w/w. In one embodiment, the wheat protein hydrolysate is in an amount ranging from about 1 to about 8% w/w. In one embodiment, the wheat protein hydrolysate is in an amount ranging from about 1 to about 7% w/w. In one embodiment, the wheat protein hydrolysate is in an amount ranging from about 1 to about 6% w/w. In one embodiment, the wheat protein hydrolysate is in an amount ranging from about 1 to about 5% w/w. In one embodiment, the wheat protein hydrolysate is in an amount ranging from about 1 to about 4% w/w. In one embodiment, the wheat protein hydrolysate is in an amount of about 1%, about 1.5%, about 2%, about 3% or about 4 % w/w. In one embodiment, the wheat protein hydrolysate is in an amount of about 2%, w/w. The w/w expressing the in weight percentage relative to the total weight of the composition.

### Oligosaccharides

The Applicant observed a synergistic effect between the previously described vegetable protein aquaculture feed inclusions with at least one oligosaccharide. Advantageously, the at least one oligosaccharide according to the present invention is a short chain oligosaccharide, presenting particularly a polymerization degree ranging from 2 to 6.

According to one embodiment, the feed composition of the invention comprise a wheat protein blend as previously described, and at least one oligosaccharide in a mass ratio ranging from about 40:1 to about 70:1. In one embodiment, the ratio ranges from about 60:1 to about 70:1. In one embodiment, the ratio ranges from about 65:1 to about 70:1. In one embodiment, the relative mass ratio between the wheat protein blend and at least one oligosaccharide is about 67.7:1.

According to one embodiment, the at least one oligosaccharide content in the composition ranges from about 0.2% to about 10% w/w. In one embodiment, the at least one oligosaccharide is in an amount ranging from about 0.2% to about 9% w/w. In one embodiment, the at least one oligosaccharide is in an amount ranging from about 0.2% to about 8% w/w. In one embodiment, the at least one oligosaccharide is in an amount ranging from about 0.2% to about 7% w/w. In one embodiment, the at least one oligosaccharide is in an amount ranging from about 0.2% to about 6% w/w. In one embodiment, the at least one oligosaccharide is in an amount ranging from about 0.2% to about 5% w/w. In one embodiment, the at least one oligosaccharide is in an amount ranging from about 0.2% to about 4% w/w. In one embodiment, the at least one oligosaccharide is in an amount ranging from about 0.2% to about 3% w/w. In one embodiment, the at least one oligosaccharide is in an amount ranging from about 0.2% to about 2% w/w. In one embodiment, the at least one oligosaccharide is in an amount ranging from about 0.2% to about 0.5% w/w. In one embodiment, the at least one oligosaccharide is in an amount of about 0.2%%, about 0.3%, about 0.4%, about 0.5%, about 0.6%, about 0.7%, about 0.8%, about 0.9% or about 1 % w/w. In one embodiment, the at least one oligosaccharide is in an amount of about 0.3%, w/w. The w/w expressing the in weight percentage relative to the total weight of the composition.

The at least one oligosaccharide according to the invention is selected from a group of oligosaccharides comprising or consisting of fructooligosaccharides, galactooligosacharides, arabinoxylooligosaccharides, mannanoligosaccharides and mixtures thereof. Preferably the at least one oligosaccharide is selected from fructooligosaccharides.

Shot chain oligosaccharides according to the present invention comprise oligosaccharides with a polymerization degree ranging from 2 to 6.

The at least one short chain oligosaccharide according to the invention is selected from a group of oligosaccharides consisting of short chain fructooligosaccharides, short chain galactooligosacharides, short chain arabinoxylooligosaccharides, short chain mannanoligosaccharides and mixtures thereof. Preferably the at least one oligosaccharide is selected from short chain fructooligosaccharides.

Fructooligosaccharides naturally occur in a number of edible plants such as onions, wheat and asparagus. They are produced commercially in one of two ways, either from sucrose, utilising fungal fructosyltransferase, or the partial hydrolysis of inulin (Bornet et al., 2002). In one embodiment, the fructooligosaccharides according to the invention are sucrose derived. In another embodiment, the fructooligosaccharides according to the invention are inulin derived. Described simply, fructooligosaccharides are inulin-type oligosaccharides, consisting of β-(2-1) linkages of D-fructose, with a terminal D-glucosyl. Derived from sucrose, fructooligosaccharides are usually represented by GFₙ, with n= 2-6 in short-chain fructo-oligosaccharides (scFOS), as linear fructose oligomers polymerise (G representing a glucopyranosyl moiety and Fₙ representing n fructofuranosyl moieties).

Short chain fructooligosaccharides according to the present invention comprise fructooligosaccharides with a polymerization degree ranging from 2 to 6. According to one embodiment, short chain fructooligosaccharides according to the present invention comprise fructooligosaccharides with a polymerization degree ranging from 3 to 5.

In one embodiment, the at least one oligosaccharide is a short chain fructooligosaccharide selected from a group consisting of kestose, nystose, fructosylnystose and mixtures thereof. In one embodiment, the at least one oligosaccharide is a short chain fructooligosaccharide mixture comprising kestose, nystose and fructosylnystose. In one embodiment, the at least one oligosaccharide is a short chain fructooligosaccharide mixture consisting of kestose, nystose and fructosylnystose.

A person skilled in the art can calculate the final concentration of each short chain fructooligosaccharide on the basis of the oligosaccharide mixture concentration used in the composition and the relative ratio of short chain fructooligosaccharides in the short chain fructooligosaccharides mixture.

In one embodiment, the feed composition according to the invention comprise at least three oligosaccharides selected from kestose in an amount ranging from about 0.09% to about 0.15% w/w; nystose in an amount ranging from about 0.17 % to about 0.2%; and fructosylnystose in an amount ranging from about 0.02% to about 0.05% w/w, in weight relative to the total weight of the composition.

To the Applicant's knowledge, literature concerning the use of fructooligosaccharides as a prebiotic in salmonids is limited and reports no beneficial effect on feed intake, survivability, digestibility or growth performance in on-growing Atlantic salmon, post 16-week feed trial (Grisdale-Helland et al., 2008).

Surprisingly the association of a wheat protein blend with the inventions oligosaccharides not only maintained or even improved the growth performance of a salmonid species, but also demonstrated a supplementary effect of immune system enhancement.

### Wheat-Oligosaccharide associations

In one embodiment, the feed composition for aquaculture, especially for fish aquaculture, comprises a wheat protein blend in an amount ranging from about 5% to about 95% w/w in weight relative to the total weight of the composition, and at least one oligosaccharide presenting polymerization degree ranging from 2 to 6 in an amount ranging from about 0.2% to about 10% w/w in weight relative to the total weight of the composition.

The sum of each ingredient concentration in weight relative to the total weight of the composition, in all of the invention's embodiments is not exceeding 100%.

The feed composition for aquaculture may comprise a wheat protein blend in an amount ranging from about 10 to about 80% w/w in weight relative to the total weight of the composition, and at least one oligosaccharide presenting polymerization degree ranging from 2 to 6 in an amount ranging from about 0.2% to about 8% w/w in weight relative to the total weight of the composition.

The feed composition for aquaculture may comprise a wheat protein blend in an amount ranging from about 10 to about 50% w/w in weight relative to the total weight of the composition, and at least one oligosaccharide presenting polymerization degree ranging from 2 to 6 in an amount ranging from about 0.2% to about 5% w/w in weight relative to the total weight of the composition.

The feed composition for aquaculture may comprise a wheat protein blend in an amount ranging from about 10 to about 25% w/w in weight relative to the total weight of the composition, and at least one oligosaccharide presenting polymerization degree ranging from 2 to 6 in an amount ranging from about 0.2% to about 2% w/w in weight relative to the total weight of the composition.

The feed composition for aquaculture may comprise a wheat protein blend in an amount ranging from about 16 to about 21%, preferably 20% w/w in weight relative to the total weight of the composition, and at least one oligosaccharide presenting polymerization degree ranging from 2 to 6, preferably from 3 to 5, in an amount ranging from about 0.2% to about 0.5% w/w, preferably 0.3% w/w, in weight relative to the total weight of the composition.

In one embodiment, the feed composition for aquaculture, especially for fish aquaculture, comprises a wheat protein blend in an amount ranging from about 5% to about 95% w/w in weight relative to the total weight of the composition, and at least one fructooligosaccharide presenting polymerization degree ranging from 2 to 6 in an amount ranging from about 0.2% to about 10% w/w in weight relative to the total weight of the composition.

The feed composition for aquaculture may comprise a wheat protein blend in an amount ranging from about 10 to about 80% w/w in weight relative to the total weight of the composition, and at least one fructooligosaccharide presenting polymerization degree ranging from 2 to 6 in an amount ranging from about 0.2% to about 8% w/w in weight relative to the total weight of the composition.

The feed composition for aquaculture may comprise a wheat protein blend in an amount ranging from about 10 to about 50% w/w in weight relative to the total weight of the composition, and at least one fructooligosaccharide presenting polymerization degree ranging from 2 to 6 in an amount ranging from about 0.2% to about 5% w/w in weight relative to the total weight of the composition.

The feed composition for aquaculture may comprise a wheat protein blend in an amount ranging from about 10 to about 25% w/w in weight relative to the total weight of the composition, and at least one fructooligosaccharide presenting polymerization degree ranging from 2 to 6 in an amount ranging from about 0.2% to about 2% w/w in weight relative to the total weight of the composition.

The feed composition for aquaculture may comprise a wheat protein blend in an amount ranging from about 16 to about 21%, preferably 20% w/w in weight relative to the total weight of the composition, and at least one fructooligosaccharide presenting polymerization degree ranging from 2 to 6, preferably from 3 to 5, in an amount ranging from about 0.2% to about 0.5% w/w, preferably 0.3% w/w, in weight relative to the total weight of the composition.

In one embodiment, the feed composition for aquaculture, especially for fish aquaculture, comprises a wheat protein blend in an amount ranging from about 5% to about 95% w/w in weight relative to the total weight of the composition, and at least one fructooligosaccharide presenting polymerization degree ranging from 2 to 6 in an amount ranging from about 0.2% to about 10% w/w in weight relative to the total weight of the composition. The relative mass ratio between the wheat protein blend and the at least one fructooligosaccharide ranging from about 40:1 to about 70:1.

The feed composition for aquaculture may comprise a wheat protein blend in an amount ranging from about 10 to about 80% w/w in weight relative to the total weight of the composition, and at least one fructooligosaccharide presenting polymerization degree ranging from 2 to 6 in an amount ranging from about 0.2% to about 8% w/w in weight relative to the total weight of the composition. The relative mass ratio between the wheat protein blend and the at least one fructooligosaccharide ranging from about 60:1 to about 70:1.

The feed composition for aquaculture may comprise a wheat protein blend in an amount ranging from about 10 to about 50% w/w in weight relative to the total weight of the composition, and at least one fructooligosaccharide presenting polymerization degree ranging from 2 to 6 in an amount ranging from about 0.2% to about 5% w/w in weight relative to the total weight of the composition. The relative mass ratio between the wheat protein blend and the at least one fructooligosaccharide ranging from about 60:1 to about 70:1.

The feed composition for aquaculture may comprise a wheat protein blend in an amount ranging from about 10 to about 25% w/w in weight relative to the total weight of the composition, and at least one fructooligosaccharide presenting polymerization degree ranging from 2 to 6 in an amount ranging from about 0.2% to about 2% w/w in weight relative to the total weight of the composition. The relative mass ratio between the wheat protein blend and the at least one fructooligosaccharide ranging from about 65:1 to about 70:1.

The feed composition for aquaculture may comprise a wheat protein blend in an amount ranging from about 16 to about 21%, preferably 20% w/w in weight relative to the total weight of the composition, and at least one fructooligosaccharide presenting polymerization degree ranging from 2 to 6, preferably from 3 to 5, in an amount ranging from about 0.2% to about 0.5% w/w, preferably 0.3% w/w, in weight relative to the total weight of the composition. The relative mass ratio between the wheat protein blend and the at least one fructooligosaccharide ranging from about 65:1 to about 70:1, preferably about 67:1.

In another embodiment, the feed composition for aquaculture, especially for fish aquaculture, comprises : wheat gluten in an amount ranging from about 5% to about 95% w/w, gluten hydrolysate in an amount ranging from about 0.1% to about 30% w/w, in weight relative to the total weight of the composition and at least one fructooligosaccharide presenting polymerization degree ranging from 2 to 6 in an amount ranging from about 0.2% to about 10% w/w in weight relative to the total weight of the composition.

The feed composition for aquaculture may comprise: wheat gluten in an amount ranging from about 10% to about 80% w/w, gluten hydrolysate in an amount ranging from about 0.5% to about 20% w/w, in weight relative to the total weight of the composition and at least one fructooligosaccharide presenting polymerization degree ranging from 2 to 6 in an amount ranging from about 0.2% to about 8% w/w in weight relative to the total weight of the composition.

The feed composition for aquaculture may comprise: wheat gluten in an amount ranging from about 10% to about 50% w/w, gluten hydrolysate in an amount ranging from about 1% to about 8% w/w, in weight relative to the total weight of the composition and at least one fructooligosaccharide presenting polymerization degree ranging from 2 to 6 in an amount ranging from about 0.2% to about 5% w/w in weight relative to the total weight of the composition.

The feed composition for aquaculture may comprise: wheat gluten in an amount ranging from about 16% to about 20% w/w, gluten hydrolysate in an amount ranging from about 1% to about 5% w/w, in weight relative to the total weight of the composition and at least one fructooligosaccharide presenting polymerization degree ranging from 2 to 6 in an amount ranging from about 0.2% to about 2% w/w in weight relative to the total weight of the composition.

The feed composition for aquaculture may comprise: wheat gluten in an amount ranging from about 16% to about 18% w/w, preferably 18%w/w, gluten hydrolysate in an amount ranging from about 1% to about 5% w/w, preferably 2%, in weight relative to the total weight of the composition and at least one fructooligosaccharide presenting polymerization degree ranging from 2 to 6, preferably from 3 to 5, in an amount ranging from about 0.2% to about 0.5% w/w, preferably 0.3% w/w, in weight relative to the total weight of the composition.

Any other suitable compounds may be included in the feed composition, including, for example, soy products, feed bases, essential amino acids, oils, minerals, protein, carbohydrates, vitamins, antioxidants and/or excipients.

### Soy

Soy-containing diets have detrimental effects at high inclusion levels, namely because of the presence of anti-nutritional factors such as protease inhibitors, lectins, phytic acid, saponins, phytoestrogens, antivitamins and allergens. There have been many potential routes explored in efforts to remove anti-nutritional factors content in protein sources for the livestock market, in turn increasing the nutritional functionality of the protein. Genetic selection of crops with desirable phenotypes has been suggested, such as a low-phytate soy line (Jervis et al., 2015). However, this is a long-term solution and the advancement of genetic modified organisms to reduce anti-nutritional factors in crops, although accepted in legislation, still carries a stigma with consumers. The removal of all anti-nutritional factors from plant protein sources is an unlikely proposition. Significant economic investment is demanded by each new removal technique, and adds an increased cost to the end product. The physical state of anti-nutritional factors within the nutrient matrices of plants also adds additional dimensions to the challenge of removal. Saponins are often found bound to amino acids which are crucial for animal nutrition. The intensive effort in trying to remove such bound complexes risks denaturing the fraction that is trying to be protected. Soy-containing diets above 60% have been shown to cause reduced integrity of the enterocytes and villi, increased mucosal vacuoles and an inflammatory response in the lamina propria and a reduced immune capacity only deteriorating further with increased inclusion.

Advantageously, the feed compositions according to the present invention comprise an inferior inclusion of soy products compared to the existing aquaculture feeds. In one embodiment, the feed compositions according to invention contain no soy products.

In one embodiment, the feed compositions comprise soy proteins in an amount ranging from about 20% to about 55% w/w, in weight relative to the total weight of the composition. In one embodiment, the feed compositions comprise soy proteins in an amount ranging from about 20% to about 30% w/w, in weight relative to the total weight of the composition. In one embodiment, the feed compositions comprise soy proteins in an amount ranging from about 25% to about 30% w/w, in weight relative to the total weight of the composition. In one embodiment, the feed compositions comprise soy proteins in an amount ranging from about 27% to 28% w/w, in weight relative to the total weight of the composition. In one embodiment, the feed compositions comprise soy proteins in an amount of about 27.1%; about 27.2%, about 27.3%, about 27.4% or about 27.5% w/w, in weight relative to the total weight of the composition.

In one embodiment, the feed compositions comprise a soybean-based meal in an amount ranging from about 5% to about 15% w/w, in weight relative to the total weight of the composition. In one embodiment, the feed compositions comprise a soybean-based meal in an amount ranging from about 5% to about 10% w/w, in weight relative to the total weight of the composition. In one embodiment, the feed compositions comprise a soybean-based meal in an amount of about 5%; about %, about 6%, about 7%, about 8%, about 9% or about 10% w/w, in weight relative to the total weight of the composition. In one embodiment, the feed compositions comprise a soybean-based meal in an amount of about 10% w/w, in weight relative to the total weight of the composition.

### Other feed bases

The feed compositions of the present invention may further comprise additional feed bases. As previously discussed, soy protein-based meal is an indicative example. Additionally or alternatively, fish-derived meal, leguminous such as pea or lupine as well as insect-derived meal base are also possible inclusions of the present invention compositions.

According to one embodiment, the feed compositions of the present invention, further comprise a fish-derived meal base.

Fish-derived meal base is a widely used constituent of aquaculture feeds.

In one embodiment, the fish-derived meal base is a herring-derived meal base.

The feed compositions of the present invention advantageously maintain their aquaculture growth performance even with a fish-derived meal base inclusion in an amount equal or inferior to about 10% w/w, in weight relative to the total weight of the composition. In one embodiment, the fish-derived meal base is in an amount of about 10% w/w, in weight relative to the total weight of the composition. In one embodiment, the fish-derived meal base is in an amount ranging from about 1% to 10% w/w, in weight relative to the total weight of the composition. In one embodiment, the feed compositions of the present contain no fish-derived meal base.

### Amino Acid supplementation

The energy requirements of fish are much lower than other farmed terrestrial animals due to their ammonotelic, poikilothermic and water supported aquatic lifestyle. However, fish require a much higher protein content in their diet to achieve maximum growth rate and these proteins/amino acids provide much of their energy needs. Alternative protein sources must not only be high in crude protein, but also have a beneficial/suitable amino acid profile.

Gluten is rich in glutamine which is a major substrate, playing a key role in maintaining intestinal morphology. This includes the enterocyte cells that line the gastrointestinal tract and are responsible for the absorption of nutrients in the digestive system (Trichet, 2010). This has been demonstrated by various studies in various species. In juvenile channel catfish *(Ictalurus punctatus)* high level free glutamine inclusion (20-30g kg⁻¹) significantly increased micro villi and enterocyte height and enterocyte migration rate in the posterior, mid and anterior intestine.

Advantageously, the feed compositions of the present invention may be devoid of glutamine supplementation. In one embodiment, glutamine is in an amount ranging from about 0.05% to about 2% w/w, in weight relative to the total weight of the composition.

Wheat gluten is low in three essential amino acids, arginine, threonine and most importantly lysine. The levels of lysine, the first limiting amino acid in wheat gluten, only comprise 1.5-1.7g/100g of wheat gluten, and in turn diets with high inclusion levels (>30% w/w) require additional supplementation with free lysine to ensure adequate lysine levels for specific species.

In one embodiment, the feed compositions of the present invention further comprise lysine in an amount ranging from about 0.05% to about 2% w/w, in weight relative to the total weight of the composition.

In one embodiment, the feed compositions of the present invention are devoid of arginine supplementation. In one embodiment, arginine is in an amount ranging from about 0.05% to about 2% w/w, in weight relative to the total weight of the composition.

In one embodiment, the feed compositions of the present invention are devoid of threonine supplementation. In one embodiment, threonine is in an amount ranging from about 0.05% to about 2% w/w, in weight relative to the total weight of the composition.

In one embodiment, the feed compositions of the present invention are devoid of leucine supplementation. In one embodiment, leucine is in an amount ranging from about 0.05% to about 2% w/w, in weight relative to the total weight of the composition.

### Fish oil/vitamins/Minerals

The benefits of omega 3 unsaturated fatty acids in the human diet is considered common knowledge and emphasis must be encouraged to maintain levels in fish flesh due to consumer pressure. These essential fatty acids originate from marine protein and oil sources and salmonids are efficient converters of fed omega 3 fatty acids into fatty acids in their flesh. Salmonids retain 30% of eicosapentaenoic acid and docosahexaenoic acid depending on the level of fish oil in their feed compositions.

In one embodiment, the feed compositions of the present invention further comprise fish oil in an amount is not exceeding 20 w/w, preferably ranging from about 15% to about 18% w/w, in weight relative to the total weight of the composition.

According to one embodiment, the feed compositions of the present invention further comprise vitamins selected from a group comprising vitamin A, vitamin E and vitamin D3, in an amount not exceeding 1% w/w, in weight relative to the total weight of the composition.

According to one embodiment, the feed compositions of the present invention further comprise minerals selected from a group consisting of Ca, Mg, P and Cu, in an amount not exceeding 2% w/w, in weight relative to the total weight of the composition.

### Antioxidants

Antioxidant compounds may be included in the animal feed composition of the invention. In one embodiment, the feed composition further comprises at least one antioxidant is selected from a group comprising butylated hydroxytoluene, ethoxyquin, tocopherols, ascorbic acid, carotenoids and mixtures thereof. Antioxidant compounds are an amount not exceeding 0.05% w/w, in weight relative to the total weight of the composition.

Ethoxyquin (1,2-dihydro-6-ethoxy-2,2,4-trimethylquinoline) may be safely used in animal feeds, when incorporated as a chemical preservative for retarding oxidation of carotene and vitamins A and E in fish feeding compositions and when the maximum quantity of the additive permitted to be used and to remain in or on the treated article shall not exceed 150 parts per million or 0.015% w/w, in weight relative to the total weight of the composition.

Accordingly, in one embodiment, the feed composition further comprises at least one antioxidant is selected from a group comprising butylated hydroxytoluene, ethoxyquin, tocopherols, ascorbic acid, carotenoids and mixtures thereof. and is in an amount not exceeding 0.05% w/w, in weight relative to the total weight of the composition. in weight relative to the total weight of the composition; on condition that ethoxyquin is in an amount not exceeding 0.015% w/w, in weight relative to the total weight of the composition.

### Excipients

Wheat gluten can act as a binder in extruded feed thanks to the viscosity and extensibility of gliadins and the elasticity and tenacity of glutenin (Apper-Bossard et al., 2013).

Thus, in one embodiment, the feed composition does not contain any additional excipients.

However, the feed composition according to the invention may further comprise excipients improving the rheological properties and compressibility in order to facilitate its formulation in adequate forms such as pellet formulations. Thus, any excipient known in the art, can be included in the compositions of the present invention. The selection of such excipients consists a routine work for a person skilled in the art.

In one embodiment, the feed composition further comprises at least one excipient selected from a group comprising binders and disintegrants, in an amount not exceeding 0.1% w/w, in weight relative to the total weight of the composition. In one embodiment, the excipient is a starch, preferably corn starch. In one embodiment, the excipient is carboxymethylcellulose.

### Enzymes

As previously discussed, the removal of all anti-nutritional factors from plant protein sources is an unlikely proposition. The addition of exogenous enzymes (such as amylase, pepsin and trypsin), to diets to combat anti-nutritional factors within the digestive system of the animal has been shown to improve nutrient use, reduce environmental impacts and reduce feeding costs, and can be consider as an anti-nutritional factors' mitigation approach.

In one embodiment, the feed composition according to the invention further comprises at least one enzyme selected from amylases, pepsins, trypsins and mixtures thereof, in an amount not exceeding 0.1 %w/w, in weight relative to the total weight of the composition.

### Feed supplement

In a second aspect, the invention relates to an aquaculture feed supplement comprising the feed composition as previously described.

In fact, a person skilled in the art can use the invention's compositions by admixing them with a commercially available aquaculture base and obtain a final aquaculture feed with the proportions of wheat protein blend and oligosaccharides as detailed above.

### Feed pellets

In a third aspect, the invention relates to feed pellets comprising the aquaculture feed composition or the aquaculture feed supplement according to the present invention.

As previously discussed, namely thanks to the viscoelastic properties of gluten proteins, the inventions feed compositions can be formulated in any form used in the aquaculture, preferably in the form of pellets.

Modern fish feed diets are often prepared in the form of feed pellets. In an indicative and not limitative way of example, the feed pellets of the invention are obtained as set forth. These pellets are made by first grinding and mixing together the ingredients according to the present invention. Then water is added and the resulting paste is extruded whereby the pellets obtained have dimensions which are controlled by the die of the extruder. These pellets are then dried. Optionally, the oil ingredients are added past the drying process. Adjusting parameters such as temperature and pressure, enables the manufacturers to make pellets that suit different fish farming methods, for example feeds that float or slowly sink.

### Method for aquaculture yield enhancement

In a fourth aspect, the invention relates a method for inducing yield of an aquaculture. The feeding with the invention's compositions showed that can lead to the enhancement of the aquaculture yield qualitatively and/or quantitively, compared to conventional soy or wheat based feeds.

The aquaculture yield enhancement can be consisting in a growth factor enhancement and/or better viability, compared to conventional soy or wheat based feeds.

According to one embodiment, the method for inducing the yield of an aquaculture comprises the feeding of the aquaculture with the feed composition, the feed supplement or the pellets according the present invention.

In one embodiment, the method for inducing the yield of an aquaculture consists in increasing the condition factor (K-factor) and/or the aquaculture mean weight by at least 0.95%. In one embodiment, the method for inducing the yield of an aquaculture consists in increasing the condition factor and/or the aquaculture mean weight by at least 1%. In one embodiment, the method for inducing the yield of an aquaculture consists in increasing the condition factor and/or the aquaculture mean weight by at least 1.5%. In one embodiment, the method for inducing the yield of an aquaculture consists in increasing the condition factor and/or the aquaculture mean weight by at least 2%.

### Infectious disease prevention

In a fifth aspect, the invention relates to a method for preventing and/or treating of a bacterial, fungal, parasitic or viral disease in an aquaculture fish population. This method comprises the daily administration of the feed composition, the feed supplement or the fish feed pellets according to the present invention.

Recirculating systems of aquacultures create unique environments for fish culture which may provide favorable conditions for disease occurrence or the reproduction of opportunistic microorganisms. Stressful conditions in recirculating systems, such as poor water quality or high stocking densities in the culture tanks, may contribute to disease outbreaks.

As previously discussed, the administration of the invention's compositions boosts the aquaculture species immune system, enhances the intestinal microbiotic defenses and reduces the species organism stress. In one embodiment, the method can further comprise the simultaneous or sequential administration of at least one anti-bacterial, anti-fungal, anti-parasitic or anti-viral agent. A person skilled in the art can choose such an agent based on his experience.

Likewise, the invention relates to a feed composition, as previously described, for use in the prevention and/or the treatment of a bacterial, fungal, parasitic or viral disease in an aquaculture fish population.

The invention also relates to a feed supplement, as previously described, for use in the prevention and/or the treatment of a bacterial, fungal, parasitic or viral disease in an aquaculture fish population. The invention also relates to feed pellets, as previously described, for use in the prevention and/or the treatment of a bacterial, fungal, parasitic or viral disease in an aquaculture fish population.

In one embodiment, the bacterial disease is selected from bacterial gill disease, furunculosis, bacterial kidney disease, or vibriosis; the fungal disease is a *Saprolegnia* spp infection; the parasitic disease is selected from *Gyrodactylus* spp infection, *Chilodonella* spp infection, *Trichodina* spp infection, *Epistylis* spp infection, *Trichophrya* spp infection, *Ichthyopthirius* spp infection, *Ichtyobodo* spp infection, proliferative kidney disease, amoebic gill infestation and *Coleps* spp infection; the viral disease is selected from infectious pancreatic necrosis, viral hemorrhagic septicemia, and infectious hematopoietic necrosis.

### BRIEF DESCRIPTION OF THE DRAWINGS

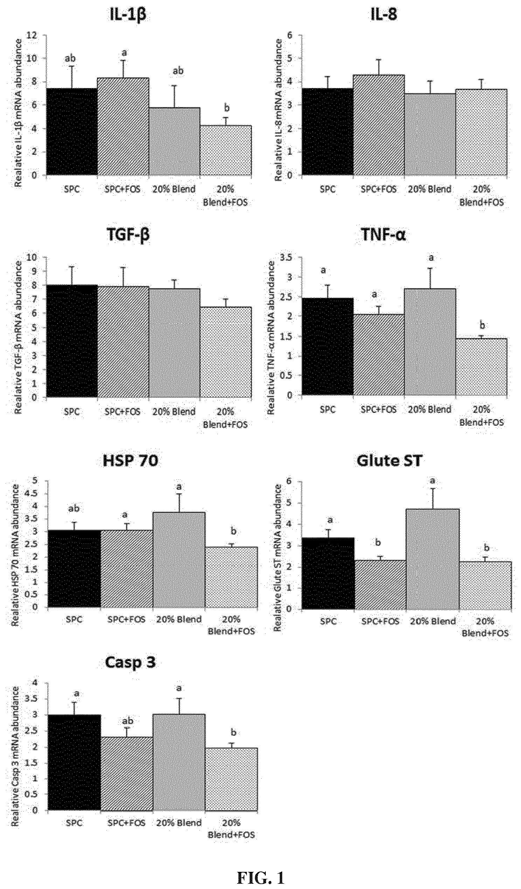

**Figure** 1 is a graph showing the relative mRNA abundance of the inflammatory factors IL-1 β, IL-8, TGF β, TNF α, Glute ST, HSP70 and Casp 3 in the posterior intestine of rainbow trout at the end of the feed trial with a feed composition D according to the invention. The results are compared with the results obtained the feed trial with the standard feed compositions A-C. Superscript letters denote significant difference (P < 0.05) between treatments. n = 6 per treatment. Data are means ± SE.

### EXAMPLES

The present invention is further illustrated by the following examples.

### Abbreviations

Casp 3: indicates Caspase-3
CMC: indicates CarboxyMethylCellulose
FCR: indicates Feed Conversion Ratio
Glute ST: indicates Glutathione S Transferase
HSP70: indicates Heat Shock Protein-70
IL: indicate Interleukin cytokines
K-factor: indicates the Condition Factor
OTU: indicates an operational taxonomic unit
PCR: indicates Polymerase chain reaction technique
SCFA: indicates short-chain fatty acids
scFOS: indicates short chain FructoOligosaccharides
SGR: indicates Specific Growth Rate
SPC: indicates soy protein control diet
TGF-β: indicate Transforming Growth Factor beta
TNF-α: indicates Tumor Necrosis Factor alpha

### Example 1: Aquaculture feed compositions

Four dietary treatments were prepared with and without 20% blended wheat proteins (vital and hydrolysed wheat gluten) and scFOS inclusions at the expense of soy protein concentrate (wheat gluten inclusion) and corn starch (scFOS inclusion).

Experimental wheat gluten products, vital wheat gluten (Amytex®) and hydrolysed, soluble wheat gluten (Solpro®), were supplied by Tereos (Marckolsheim, France). A 20% inclusion level of blended vital and soluble-hydrolysed wheat gluten was formulated with wheat gluten incorporated at the expense of soy protein concentrate, in the same formulation as a soy protein control diet (diet SPC). A further two dietary treatments were formulated consisting of the SPC and 20% blend treatments each with the addition of 0.3% scFOS, at the expense of corn starch. scFOS (Profeed®) was provided by Tereos (Marckolsheim, France). All diets were iso-nitrogenous and iso-lipidic.

**Table 1. Aquaculture feed compositions**

| Compositions: | A | B | C | D |
|---|---|---|---|---|
| | SPC | SPC+FOS | 20% Blend | 20% Blend +FOS |
| Ingredient (w/w %) | | | | |
| Fishmeal | 10 | 10 | 10 | 10 |
| Soy protein hydrolysate | 52.00 | 52.00 | 27.21 | 27.21 |
| Soybean meal | 10 | 10 | 10 | 10 |
| Vital wheat gluten | - | - | 18 | 18 |
| Soluble wheat gluten | - | - | 2 | 2 |
| Corn starch | 7.36 | 7.06 | 13.31 | 13.01 |
| Fish oil | 16.49 | 16.49 | 15.58 | 15.58 |
| L-Lysine HCl | 1.85 | 1.85 | 1.60 | 1.60 |
| Calcium carbonate | 1 | 1 | 1 | 1 |
| Vitamin mineral mix | 0.5 | 0.5 | 0.5 | 0.5 |
| CMC-Binder | 0.5 | 0.5 | 0.5 | 0.5 |
| scFOS | - | 0.30 | - | 0.30 |
| Antioxidant mix | 0.03 | 0.03 | 0.03 | 0.03 |

The proximate composition analysis of the inventions aquaculture feeds was carried out and presented in table 2.

**Table 2. Aquaculture feed compositions analysis**

| Compositions: | A | B | C | D |
|---|---|---|---|---|
| | SPC | SPC+FOS | 20% Blend | 20% Blend +FOS |
| Proximate composition (w/w %) | | | | |
| Moisture | 5.08 | 5.39 | 5.35 | 5.66 |
| Protein | 46.94 | 46.6 | 47.39 | 47.48 |
| Lipid | 18.09 | 17.99 | 17.35 | 17.7 |
| Ash | 6.57 | 6.61 | 5.13 | 5.11 |

### Example 2: Immune-Stimulatory effects

The relative expression levels of a number of immunologically relevant genes were assed as an indicator of the effect of wheat gluten inclusions and scFOS supplementation on the localized immunological status of the posterior intestine.

To the Applicant's knowledge this is the first investigation to assess the effect of scFOS on immunologically relevant genes in rainbow trout. The Pro-inflammatory interleukins and TNF-a together contribute in host defense against bacterial invasion or colonization.

The relative transcriptional level gene expression of IL-1β, IL-8, TGF-β, TNF-α, Glute ST, HSP70 and Casp 3 are presented in Figure 1.

The present results suggest a symbiotic effect of wheat gluten and scFOS to modulate the pro-inflammatory cytokine expression in the anterior intestine.

TNF-α, which plays an important role in cell proliferation, migration, differentiation, apoptosis, necrosis, and the induction of other cytokines was significantly down regulated past the 20% blend + FOS (composition D) experimental diet compared to all other diets.

Down regulation of the pro-inflammatory cytokine IL-1β was observed with the composition D experimental diet compared to the SPC + FOS (composition B) diets.

The cytokines IL-8 and TGF-β expressions were not significantly modified past the composition D experimental diet.

HSP 70 was significantly down regulated past the composition D experimental diet compared to all other diets.

The relative expression of caspase-3 showed similar down regulation trends as HSP 70 following the Composition D experimental diet.

Lastly, the oxidative stress indicator Glutathione-S Transferase was significantly down regulated past the composition D experimental diet compared composition A and B diets.

### Example 3: Microbiome effects

Post trimming and quality control, 1,612,069 sequence reads were retained for downstream analysis, identifying 520 distinct OTU's. Alpha refraction analysis of Good's coverage reveals estimations of > 0.998 for the total species present per sample. Refraction of Good's coverage plateaued after approximately 5,000 reads per sample, suggesting that the bacterial communities were fully sampled and data are representative of the population. No significant difference was observed in alpha diversity parameters between composition A, B, C or D diets (P > 0.05).

Ecological parameters of the posterior intestine allochthonous bacterial community, observed species and microbiota species richness was unaffected by the composition D experimental diet.

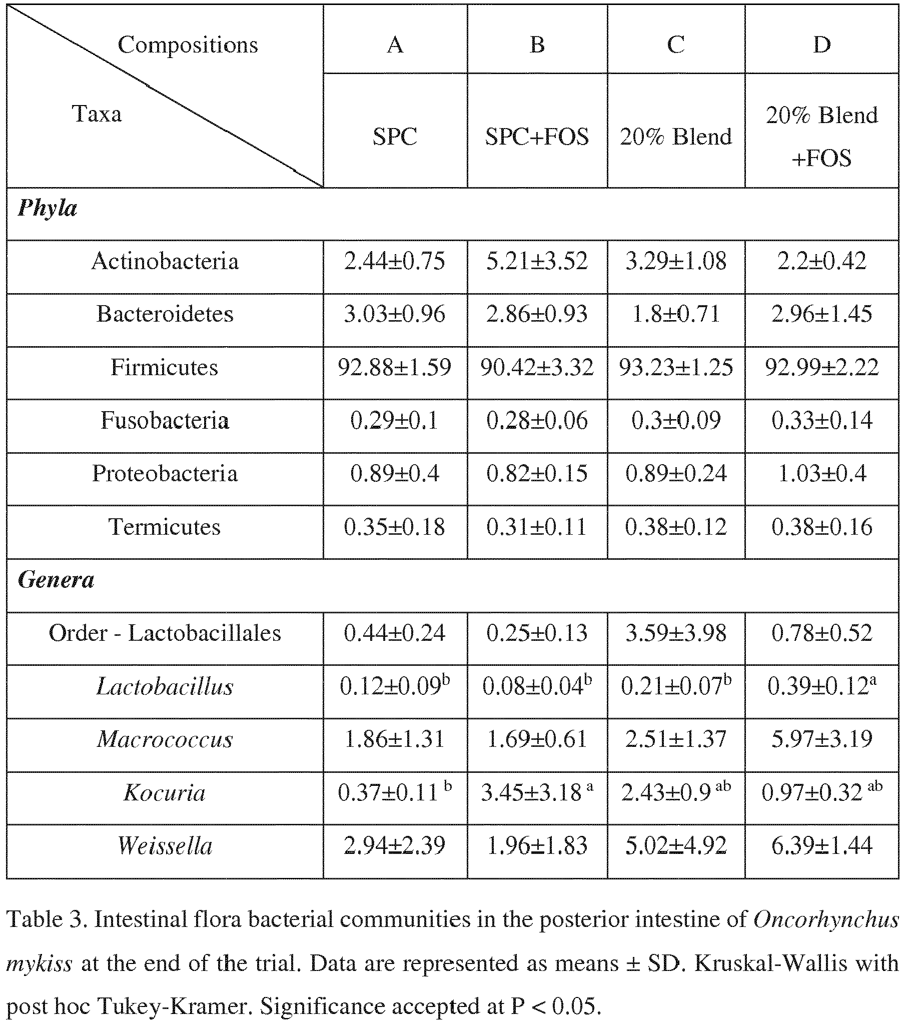

Reads associated to the genus *Lactobacillus,* although accounting for less than 1% of the microbiota of any of the three diets, were significantly increased in the composition D experimental compared to all other diets. *Lactobacillus* spp. have been identified and associated with the core microbiota of salmonids, and are among species targeted for enrichment in the intestine.

These results indicate a beneficial synergistic effect of scFOS and blended wheat gluten inclusions, since many *Lactobacillus, Macrococcus* and *Weissella* spp. are investigated as probiotics in a range of species.

Composition D diet significantly increase the proportion of the *Kocuria* genus compared to the standard SPC diet (composition A).

The ability of scFOS supplementation at 0.3% to enhance the genus *Kocuria* in the allochthonous microbiota of rainbow trout in vegetable protein-based diets is potentially beneficial, aiding protection from vibriosis.

The SCFA analysis showed no substantial difference between the four trialed diets.

### Example 4: Growth performance effects

Growth performance was assessed at the end point of the 70-day feed trial, based on the final tank biomass weights. Assessment of growth performance was achieved through FCR, SGR, mean fish weight, PER, K factor and survivability. Rainbow trouts in all treatments performed very well throughout the trial with good appetites, achieving positive growth performance, achieving FCR's of 0.94 ± 0.03 past the composition D experimental diet.

| Compositions: | A | B | C | D |
|---|---|---|---|---|
| | SPC | SPC+FOS | 20% Blend | 20% Blend +FOS |
| FCR | 0.94±0.01 | 0.95±0.05 | 0.95±0.03 | 0.94±0.03 |
| SGR | 2.05±0.01 | 2.05±0.05 | 2.07±0.03 | 2.07±0.05 |
| End point Mean weight (g) | 60.15±0.49 | 61.23±1.02 | 61.66±1.00 | 60.93±1.85 |
| Protein efficiency ratio | 2.26±0.03 | 2.27±0.11 | 2.26±0.07 | 2.24±0.08 |
| K-factor | 1.54±0.10 | 1.47±0.07 | 1.54±0.06 | 1.54±0.10 |
| Survivability (%) | 100±0.00 | 99.8±1.59 | 99.54±0.78 | 100±0.00 |

Table 4. Growth performance of rainbow trout at the end of the experimental diets trial. Data are presented as mean values ± standard deviation, n=3.

The excellent growth performance observed by the soy protein basal control (composition A) left not enough scope for nutritional improvement, with fish preforming optimally on the cold extruded/pressed diets in a flow-through, virgin water experimental system. Survivability and condition factor (K-factor) were unaffected by the dietary inclusion of scFOS to basal diets or wheat gluten inclusion. Carcass lipid, protein ash and moisture content were unaffected by dietary treatments.

### Materials and Methods

All experimental work involving fish was conducted under the approval of the Plymouth University Ethical Committee.

### Experimental design

Eight hundred and sixty-four rainbow trout (XXX triploid genotype and wild phenotype) were acquired from the commercial production raceways at Exmoor fisheries (Somerset, UK) and stocked into 12, 120L tanks in a flow-through research system. Fish were stocked 72 fish per tank; average weight = 14.65 ± 0.07g, at an initial stocking density of 8.79 ± 0.04 Kg/m³. Flow through tanks were supplied with virgin spring water at a flow rate of about 6 L/min.

Over the course of a 70-days nutritional feed trial, four dietary treatments with and without 20% blended (vital and hydrolysed) wheat gluten and scFOS inclusions were fed to rainbow trout at the expense of soy protein hydrolysate (wheat gluten inclusion) and corn starch (scFOS inclusion). Dietary treatments were randomly attributed to triplicate tanks, and fed at a rate of 1.5 - 2% of biomass per day utilising commercially available clockwork belt feeders. Feed was adjusted daily on a predicted FCR of 1, based on initial biomass weights and subsequent bi-weekly tank biomass weighing data. Rainbow trouts were maintained at 10.5± 0.5°C with an 18:6 light dark photoperiod utilising florescent lights and timers. Dissolved oxygen was maintained above 85%. At the trial end point, additional samples were taken for carcass composition, molecular gene expression, microbiological and SCFA analysis.

### Experimental diets

Four experimental diets were formulated and manufactured at the University of Plymouth. Experimental wheat gluten products, vital wheat gluten (Amytex®) and hydrolysed, soluble wheat gluten (Solpro®), were supplied by Tereos (Marckolsheim, France). A 20% inclusion level of blended vital and soluble-hydrolysed wheat gluten was formulated with wheat gluten incorporated at the expense of soy protein hydrolysate, in the same formulation as a soy protein control diet (diet SPC, composition A). A further two dietary treatments were formulated consisting of the SPC and 20% blend treatments each with the addition of 0.3% scFOS, at the expense of corn starch. scFOS (Profeed®) was provided by Tereos (Marckolsheim, France). All diets were iso-nitrogenous and iso-lipidic. Diet formulation and proximate composition are presented in Example 1.

The following ingredients were provided as follows: Fishmeal (LT94 herring-meal provided by CC Moore, UK); Soy protein hydrolysate (SPC 60, Biomar, DK), Soybean meal (HP 100, Hamlet, DK), Corn starch and Calcium Carbonate (Fisher Scientific, USA), Fish oil (Epanoil, Seven Seas, UK), L-lysine HCl and CMC (Sigma Aldrich, UK).

The antioxidant mix was provided by Premier Pet Nutrition, UK and comprised ethoxyquin 0.075 g/kg, Butylated hydroxytoluene 0.05 g/kg and natural tocopherols 0.2g/kg.

### Sampling

Throughout the course of the 70-day feeding trial, tank biomass was weighed bi-weekly, and prior to end point sampling to allow the calculation of growth performance. At the end point of the 70-day feed trial, three fish per tank were euthanised and samples taken for intestinal microbiota analysis (n = 9 per treatment). A further three fish per tank were euthanised and samples taken for gene expression and SCFA analysis (n = 9 per treatment, per analyses). Three fish per tank were also euthanised for analysis of carcass composition. Fish were euthanised with an overdose of MS-222 (200 mgL-1, Pharmaq, UK) for 5 minutes, followed by destruction of the brain. Fish were dissected and intestine 3353 excised post pyloric caeca to the anal vent, visceral fat removed and samples taken from 3354 identical areas of the posterior region as described in section 2.6. Fish sampled for microbiological analysis of the allochthonous bacterial community of the posterior intestine were dissected and samples were taken under aseptic conditions utilising sterile forceps and collected in PCR clean / sterile microcentrifuge tubes, before storage at - 20°C.

### High -throughput intestinal microbiology

Samples of posterior intestine digesta for high throughput sequence analysis were taken aseptically from two fish per tank, providing n = 6 per treatment. DNA was extracted from 100 mg of sample. High throughput sequencing was carried out.

### Gene expression, RNA extraction, cDNA synthesis and real-time PCR

Two fish per tank were sampled for gene expression analysis. RNA extraction, cDNA synthesis and real-time PCR were carried out.

### Reference genes, genes of interest and analysis

Beta-actin (β-actin) and elongation factor 1-alpha (EF1-α) were used as reference genes. The absence of primer-dimers, amplification products in negative controls and acceptable primer efficiencies were insured prior to and whilst running samples.

Genes of interest analysed were the pro-inflammatory cytokines TNF-α, IL-8 and interleukin IL 1β. The anti-inflammatory cytokine: TGF-β. The cellular stress biomarker: HSP70, antioxidant status indicator: Glute-ST and apoptosis biomarker: Casp 3. Primers and their sequences can be found in Table 5. Expression analysis was carried out.

### SCFA analysis of luminal contents

High performance liquid chromatography analysis of the posterior intestinal digesta revealed no dietary effect on SCFA concentrations (P > 0.05). Formic acid (CH₂O₂) was observed in the highest concentrations followed by acetic acid (C₂H₄O₂), lactic acid (C₃H₆O₃) and trace levels of Valeric acid (C₅H₁₀O₂). Butyric acid was not detected.

**Table 5. Primer information used for real-time PCR analysis**

| SEQ ID_NO | Gene | Forward primer sequence (5'-3') | Amplicon size (bp) | Accession No | E-value | Annealing temp |
|---|---|---|---|---|---|---|
| | | Reverse primer sequence (5'-3') | | | | |
| 1 | β-actin | ACTGGGACGACATGGAGAAG | 57 | AJ438158.1 | 2.0 | 60 |
| 2 | | CCACCCTCAGCTCGTTGTAG | | | | |
| 3 | EF1-α | AGGCTCCATCTTGGCTTCTC | 76 | AF498320.1 | 2.1 | 60 |
| 4 | | GGGACCAGACTCGTCGTACT | | | | |
| 5 | IL1-β | CTGCCTCAGGGTCTGGATCT | 74 | AJ223954.1 | 2.0 | 58 |
| 6 | | GCGATGATGAGGTTGGCAATG | | | | |
| 7 | IL-8 | CGGAGAGCAGACGTATTGGTAA | 58 | HG917307.1 | 1.9 | 60 |
| 8 | | GAGCTGGGAGGGAACATCTC | | | | |
| 9 | TNF-α | TGGGTGTGAGTGACATCGTTAT | 87 | HE717002.1 | 2.1 | 60 |
| 10 | | AGACCCTCAGCATCTGGTACT | | | | |
| 11 | Glute-ST | CCTTCTCATTGGCTGACGTTAT | 70 | NM_001160559.1 | 2.0 | 58 |
| 12 | | GCCGTAGACAGCCCAAAG | | | | |
| 13 | Casp-3 | AACAGATGTGGATGCTGGCTAT | 80 | AJ586436.1 | 2.1 | 60 |
| 14 | | CCGTCTGGTCATTGGCAACTT | | | | |
| 15 | TGF-β | TGCCTTGTGATTGTGGGAAAC | 68 | AJ007836.1 | 2.1 | 60 |
| 16 | | CCTCAGCTTGTTCATCCCTGAT | | | | |
| 17 | HSP-70 | TTGGCCGCAGGTTTGATGAT | 60 | K02550.1 | 2.1 | 60 |
| 18 | | CTTCAAAGGGCCAATGCTTCAT | | | | |

## Claims

1. Feed composition for aquaculture, especially for fish aquaculture, comprising:
- a wheat protein blend consisting of wheat gluten and a wheat protein hydrolysate; and
- at least one oligosaccharide in an amount ranging from about 0.2% to about 10 % w/w; said oligosaccharides having a polymerization degree ranging from 2 to 6;
w/w meaning in weight relative to the total weight of the composition.

2. The feed composition according to claim 1, wherein:
- wheat protein blend is in an amount ranging from about 5% to about 25 % w/w; and
- the at least one oligosaccharide is in an amount ranging from about 0.2% to about 5 % w/w.

3. The feed composition according to claim 1 or 2, wherein the ratio between the wheat protein blend and the at least one oligosaccharide ranges from about 40:1 to about 70:1.

4. The feed composition according to any one of claims 1 to 3, wherein the at least one oligosaccharide is selected from fructooligosaccharides, galactooligosacharides, arabinoxylooligosaccharides, mannanoligosaccharides and combination thereof; preferably the at least one oligosaccharide is selected from fructooligosaccharides.

5. The feed composition according to any one of claims 1 to 4, wherein the at least one oligosaccharide is at least one fructooligosaccharide selected from a group consisting of kestose, nystose, fructosylnystose and mixtures thereof.

6. The feed composition according to any one of claims 1 to 5, further comprising soy protein in an amount ranging from about 20% to about 30 % w/w, in weight relative to the total weight of the composition.

7. The feed composition according to any one of claims 1 to 6, further comprising at least one ingredient selected from:
- soybean based meal in an amount not exceeding 15% w/w;
- starch, preferably corn starch, in an amount not exceeding 15% w/w;
- fish oil in an amount not exceeding 20% w/w;
- at least one amino acid, preferably selected from a group consisting of lysine and arginine, said at least one amino acid being in an amount not exceeding 2% w/w;
- mineral elements selected from Ca, Mg, P and Cu, in an amount not exceeding 2% w/w;
- vitamins selected from vitamin A, vitamin E and vitamin D3, in an amount not exceeding 1% w/w; and/or
- antioxidant agents selected from butylated hydroxytoluene, ethoxyquin, tocopherols, ascorbic acid and carotenoids, in an amount not exceeding 0.05% w/w;
in weight relative to the total weight of the composition.

8. The feed composition according to any one of claims 1 to 7, further comprising a fish-derived meal base; preferably in an amount ranging from about 1% to about 10% w/w in weight relative to the total weight of the composition; even more preferably said fish-derived meal base is a herring derived base meal.

9. The feed composition according to any one of claims 1 to 8, said composition comprising:
- wheat protein blend in about 20% w/w;
- at least one oligosaccharide selected from fructooligosaccharides having a polymerization degree ranging from 3 to 5, in an amount ranging from about 0.2 % to about 0.5 % w/w;
- soy protein in an amount ranging from about 25% to about 55% w/w;
- fish derived base meal in about 10 % w/w; and
- lysine in an amount ranging from about 1% to about 2% w/w;
in weight relative to the total weight of the composition.

10. The feed composition according to any one of claims 1 to 9, said composition comprising:
- wheat protein blend in about 20% w/w;
- at least three oligosaccharides selected from:
- kestose in an amount ranging from about 0.09% to about 0.15% w/w;
- nystose in an amount ranging from about 0.17 % to about 0.2%; and
- fructosylnystose in an amount ranging from about 0.02% to about 0.05%;
- soy protein in an amount ranging from about 25% to about 55% w/w;
- fish derived base meal in about 10 % w/w; and
- lysine in an amount ranging from about 1% to about 2% w/w;
in weight relative to the total weight of the composition.

11. The feed composition according to any one of claims 1 to 10, which is a fish feed composition wherein the fish is selected from the Salmonidae family comprising fish of the taxa *Salmo, Oncorynchus, Salvelinus* or crossbreeds thereof; preferably the fish belongs to the *Oncorhynchus mykiss* taxon.

12. An aquaculture feed supplement composition comprising the composition according to any one of claims **1** to **11.**

13. Feed pellets comprising the feed composition according to any one of claims **1** to **11** or the feed supplement composition according to claim **12.**

14. A method for inducing the yield of an aquaculture, said method comprising the feeding of the said aquaculture with the feed composition according to any one of claims **1** to **11,** the feed supplement composition according to claim **12,** or the pellets according to claim **13.**

15. The feed composition according to any one of claims **1** to **11,** the feed supplement composition according to claim **12** or the pellets according to claim **13** for use in the prevention of a bacterial, fungal, parasitic or viral disease in an aquaculture fish population.
